# EUROPEAN PATENT APPLICATION

(11) **EP 4 332 070 A1**
(43) Date of publication of application: **06.03.2024**
(21) Application number: 22193118.1
(22) Date of filing: 31.08.2022
(51) Int. Cl.: C04B 22/08, C08G 59/00, C08L 63/00

(54) **CURABLE PRECURSOR OF AN ADHESIVE COMPOSITION COMPRISING CALCIUM HYDROXIDE NITRATE PARTICLES**

(71) Applicant: 3M Innovative Properties Company, Saint Paul, MN 55133-3427 (US)
(72) Inventor: Heering, Christian, 40237 Düsseldorf (DE)
(74) Representative: Mathys & Squire

(57) **Abstract**

The present disclosure relates to a curable precursor of an adhesive composition, the curable precursor comprising a curable resin and a curing accelerator, wherein the curing accelerator comprises calcium hydroxide nitrate particles.

The present disclosure further relates to processes for making calcium hydroxide nitrate particles as used for said curable precursor.

## Description

### Technical Field

The present disclosure relates to a curable precursor of an adhesive composition comprising a curable resin and a curing accelerator, the curing accelerator comprising calcium hydroxide nitrate particles.

### Background

For adhesive epoxide compositions, several metal complexes are known for their ability to catalyze the curing reaction between amine curing agents and epoxy groups. Among those, calcium salts, particularly calcium salt hydrates with anions such as chloride or nitrate, are highly efficient in enhancing the curing speed of epoxy adhesive compositions by means of shortening the pot life, leading to earlier gelation.

Calcium nitrate tetrahydrate (Ca(NO₃)₂ · 4 H₂O) is used in many two component epoxy adhesives as accelerator for the curing reaction between amines and epoxy groups. Calcium nitrate tetrahydrate has a low melting point of 42 °C. During the manufacturing process of the amine curing agent part of the curable precursor of the epoxy adhesive, the calcium nitrate tetrahydrate is molten in a basic (pH > 7) environment.

Different species comprising Ca²⁺ and OH⁻ and such with further anions present in the adhesive mixture (e.g., Ca(OH)₂, CaO · nH₂O, Ca(OH)X (X = any monovalent anion such as F⁻, Cl⁻, Br, I⁻, H₂PO₃⁻, HSO₄⁻, H₂SO₃⁻, NO₃⁻, NO₂⁻, and others), Ca₂O(OH)₂, Ca(OH)₂ · CaCl₂, Ca(OH)(CF₃SO₃), and Ca(OH)(CH₃SO₃)), and complexes or adducts of Ca²⁺ with NO³⁻ are then formed. Ca(NO₃)₂ · 4 H₂O is known to react fast with hydroxides to form insoluble Ca(OH)₂.

This means that calcium nitrate tetrahydrate has a tendency to react to other compounds in a basic environment in a not predictable or reliable manner.

Furthermore, calcium nitrate tetrahydrate is hygroscopic, which is undesired for purposes of dosage and storage.

There is still a need for a curable precursor of an adhesive composition having an enhanced curing speed and a good storage stability and which can be produced in a reliable manner.

As used herein, "a", "an", "the", "at least one" and "one or more" are used interchangeably. The term "comprise" shall include also the terms "consist essentially of' and "consists of".

### Summary

In a first aspect, the present disclosure relates to a curable precursor of an adhesive composition, the curable precursor comprising a curable resin and a curing accelerator, wherein the curing accelerator comprises calcium hydroxide nitrate particles.

In another aspect, the present disclosure also relates to the use of calcium hydroxide nitrate particles as curing accelerator, i.e., as catalyst, for a curable precursor of an adhesive composition.

In yet a further aspect, the present disclosure relates to calcium hydroxide nitrate particles having a mean particle size (d₅₀) of up to 300 µm.

In yet a further aspect, the present disclosure relates to a process for making calcium hydroxide nitrate particles as disclosed herein and as used for the curable precursor of the present disclosure, the process comprising
providing calcium nitrate tetrahydrate particles,
providing calcium hydroxide particles,
dissolving the calcium nitrate tetrahydrate particles in water to form a nitrate solution,
mixing the calcium hydroxide particles with the nitrate solution,
reacting the calcium hydroxide particles with the nitrate solution,
evaporating the solvent water to form calcium hydroxide nitrate particles, and
optionally drying the calcium hydroxide nitrate particles.

In yet a further aspect, the present disclosure relates to a process for making calcium hydroxide nitrate particles as disclosed herein and as used for the curable precursor of the present disclosure, the process comprising
providing calcium nitrate tetrahydrate particles,
providing calcium hydroxide particles,
melting the calcium nitrate tetrahydrate particles to form a calcium nitrate tetrahydrate melt,
mixing the calcium hydroxide particles with the calcium nitrate tetrahydrate melt,
reacting the calcium hydroxide particles with the calcium nitrate tetrahydrate melt to form calcium hydroxide nitrate particles, and
optionally drying the calcium hydroxide nitrate particles.

In yet a further aspect, the present disclosure relates to a process for making a cured composition from the curable precursor disclosed herein, the process comprising
providing a curable precursor of an adhesive composition, wherein the curable precursor comprises a curable resin and a curing accelerator, wherein the curing accelerator comprises calcium hydroxide nitrate particles, and
curing the curable precursor.

The curable precursor of an adhesive composition as disclosed herein has an enhanced curing speed and a good storage stability. Furthermore, the curable precursor of an adhesive composition as disclosed herein can be produced in a reliable manner.

The calcium hydroxide nitrate particles have the function of an accelerator for curing of the curable precursor.

The calcium hydroxide nitrate particles as disclosed herein and as used for the curable precursor of the present disclosure are a stable compound which does not have a tendency to react to other calcium compounds in an uncontrolled manner. Furthermore, and contrary to the hygroscopic calcium nitrate tetrahydrate, the calcium hydroxide nitrate particles are not hygroscopic which is advantageous for purposes of dosage and storage.

The calcium hydroxide nitrate particles can be used in powder form which allows a shorter process and mixing time, contrary to the calcium nitrate tetrahydrate of the prior art which needs to be used as a solution in liquid form, due to its hygroscopic properties and its tendency to agglomerate, and which requires a longer process and mixing time.

In some embodiments, the curable precursor disclosed herein comprises an epoxide resin and is in the form of a two-part composition, and the process time for producing the curable precursor can be reduced, as compared to the process time for producing a curable precursor comprising calcium nitrate tetrahydrate as curing accelerator.

In some embodiments, the curable precursor disclosed herein comprises an epoxide resin and is in the form of a one-part composition, and the calcium hydroxide nitrate particles as disclosed herein can be used as curing accelerator. Contrary to that, calcium nitrate tetrahydrate particles do not have an accelerating function for curing of adhesive precursors comprising an epoxide resin and being in the form of a one-part composition.

The shelf life of curable precursors comprising an epoxide resin and being in the form of a one-part composition is not reduced by the use of the calcium hydroxide nitrate particles as curing accelerator, contrary to known accelerators (such as urea, substituted urea, BF₃ amin complexes, acid anhydrides, tertiary amines, dicyandiamide epoxy reaction products (e.g., adducts, salts, Mannich bases), and imidazoles), which reduce the shelf life of the one-part compositions.

In some embodiments, the adhesive composition which is made from the curable precursor is a polyurethane adhesive composition and the curable precursor is in the form of a two-part composition, and the shelf life is not reduced by the use of the calcium hydroxide nitrate particles as curing accelerator.

### Brief description of the drawings

The present disclosure is explained in more detail on the basis of the drawings, in which
Figure 1 shows a scanning electron micrograph of calcium hydroxide nitrate particles as disclosed herein; and
Figure 2 shows XRD results of calcium hydroxide nitrate particles as disclosed herein.

### Detailed Description

Disclosed herein is a curable precursor of an adhesive composition, the curable precursor comprising a curable resin and a curing accelerator. The curing accelerator comprises calcium hydroxide nitrate particles.

A "curable precursor" is meant to designate a composition which can be cured by combining a first and a second reactive component. The curable precursor comprises a curable resin comprising a first and a second reactive component. The second reactive component is able to react with the first reactive component, thereby curing the curable precursor. In many embodiments, the second reactive component comprises a curing agent, and a "curable precursor" is meant to designate a composition which can be cured by using a curing agent. The term "curing agent" is meant to refer to a substance or a group of substances able to start or initiate or contribute to the curing process of the curable precursor.

The adhesive composition which is made from the curable precursor disclosed herein may be selected from the group consisting of epoxy adhesive compositions, polyurethane adhesive compositions, polyurea adhesive compositions, and combinations thereof.

The curable precursor disclosed herein comprises a curable resin. The curable resin may comprise a resin selected from the group consisting of epoxy resins, polyisocyanate resins, and combinations thereof.

The epoxy resin which may be comprised in the curable precursor disclosed herein and in the curable resin used herein is not particularly limited. Any epoxy resin commonly known in the art may be used in the context of the present disclosure.

Epoxy resins are polymers having one or more epoxy-functionality. Typically, but not exclusively, the polymers contain repeating units derived from monomers having an epoxy-functionality, but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof.

In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol, or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e., compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenylsulfone, 2,2-dihydroxy-1,1-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethyl methylmethane, dihydroxy-diphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by formula (1) wherein n denotes the repeating unit (in case of n = 0 formula (1) represents the diglycidyl ether of bisphenol A):

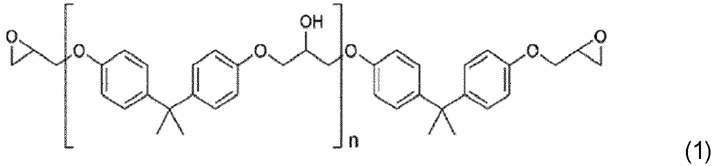

Typically, the epoxy resins are blends of several resins. Accordingly, n in formula (1) may represent an average value of the blend and may not be an integer but may include values like, for example and not limited thereto, 0.1 to 2.5. Instead of, or in addition to, using the aromatic epoxy resins described above also their fully or partially hydrogenated derivatives (i.e., the corresponding cycloaliphatic compounds) may be used. Instead of, or in addition to using aromatic epoxy resins also aliphatic, for example cyclic or acyclic, linear or branched, epoxy resins may be used.

The epoxy resin may comprise a combination or a mixture of two or three different epoxy resins. Preferably, the epoxy resin is liquid at room temperature but also solid epoxy resins, or resin particles may be used or may be used in dissolved form, for example dissolved or dispersed in a solvent or another liquid resin. In a typical aspect, the curable precursor of the present disclosure comprises a mixture of liquid and solid epoxy resins, in particular a mixture of a liquid and a solid epoxy resin.

Preferably, the epoxy resin is liquid at ambient conditions (23 °C, 1 bar). Typically, the epoxy resins may have a viscosity as measured according to ASTM D445 of from about 4 to about 2000 Pa·s at 20 °C.

The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Specialty Chemicals GmbH, Rosbach, Germany, or under the trade designation D.E.R.-331 or D.E.R-332 from Dow Chemical Co.); diglycidyl ether of bisphenol F (e.g., EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g., EPIKOTE 232 available from Momentive Specialty Chemicals, Columbus, USA).

Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.).

The polyisocyanate resin which may be comprised in the curable precursor disclosed herein and in the curable resin used herein is not particularly limited.

The polyisocyanate resin may comprise various polyfunctional isocyanate compounds. Examples of such polyfunctional isocyanate compounds include polyfunctional aliphatic isocyanate compounds, polyfunctional aliphatic cyclic isocyanate compounds, and polyfunctional aromatic isocyanate compounds.

Examples of the polyfunctional aliphatic isocyanate compounds include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional aliphatic cyclic isocyanate compounds include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, hydrogenated tetramethylxylene diisocyanate, and bio-based polyfunctional aliphatic cyclic isocyanates, such as 2-heptyl-3,4-bis(9-isocyanatononyl)-1-pentylcyclohexane from BASF under tradename DDI^{®}1410.

Examples of the polyfunctional aromatic isocyanate compounds include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4' diphenyl ether diisocyanate, 4,4'-diphenyl diisocyanate, 1,5-naphthalene diisocyanate, and xylylene diisocyanate.

For curable resins comprising an epoxy resin, the curable resin typically further comprises a curing agent. The term "curing agent" is meant to refer to a substance or a group of substances able to start or initiate or contribute to the curing process of the curable precursor. This means that "a curing agent" is meant to be a curing agent suitable for curing the curable precursor, i.e., a curing agent for the curable precursor. In other words, the first reactive component of a curable precursor for an epoxy adhesive composition as disclosed herein may comprise an epoxy resin, and the second reactive component of a curable precursor for an epoxy adhesive composition as disclosed herein may comprise a curing agent, and the curable precursor may be cured by the curing reaction of the first and second reactive component.

The curable precursor of an adhesive composition as disclosed herein may comprise only one curing agent. The curable precursor of an adhesive composition as disclosed herein may as well comprise more than one curing agent.

If the curable resin comprises an epoxy resin, curing agents suitable for use in the present disclosure are compounds which are capable of crosslinking (curing) the epoxy resin. The curing agents for curing the epoxy resin are not particularly limited. Suitable curing agents for curing the epoxy resin may be selected from the group consisting of amines, acid anhydrides, and BF₃ amine complexes. The amine may be a primary, secondary or tertiary amine. The amine may be an aliphatic, cycloaliphatic, linear, branched or aromatic amine. The amine may be a polyether amine. The amine may be dicyandiamide, dicyandiamide epoxy reaction products (e.g., adducts, salts, Mannich bases), imidazole, salts of imidazole, or imidazolines.

In some embodiments, the curable resin comprises an epoxy resin, and the curable precursor further comprises a curing agent, and the curing agent comprises an amine, and the amine preferably comprises dicyandiamide. Typically, dicyandiamide is used as curing agent for curable precursors comprising a curable resin comprising an epoxy resin, wherein the curable precursor is in the form of a one-part composition.

For curable resins comprising a polyisocyanate resin, the curable resin may further comprise at least one of a polyol and an amine, i.e., the curable resin may further comprise a polyol, or an amine, or a polyol and an amine. Typical curing reactions for curable resins comprising a polyisocyanate resin are the reaction of a polyisocyanate resin with a polyol, or the reaction with a polyisocyanate resin with an amine, or the reaction of a polyisocyanate resin with a polyol and an amine. In other words, the first reactive component of a curable precursor for an polyurethane adhesive composition as disclosed herein may comprise a polyisocyanate resin, and the second reactive component of a curable precursor for a polyurethane adhesive composition may comprise a polyol, or a polyol and an amine; and the first reactive component of a curable precursor for an polyurea adhesive composition as disclosed herein may comprise a polyisocyanate resin, and the second reactive component of a curable precursor for a polyurea adhesive composition may comprise an amine.

In the curing reaction of a polyisocyanate resin with a polyol, the polyol may have two or more hydroxyl groups, e.g., a diol or a triol or a mixture thereof. Examples of suitable polyols are polyether polyols, polyester polyols, polycarbonate polyols, polycaprolactone polyols, and mixtures thereof.

In the curing reaction of a polyisocyanate resin with a polyol, the polyol may comprise a hydroxyl functionalized polyurethane prepolymer.

In the curing reaction of a polyisocyanate resin with an amine, or with a polyol and an amine, the amine may be a latent amine and may also be referred to as "latent amine hardener". A latent amine hardener represents a family of substances that upon contact with water can hydrolyze to form the corresponding amines. Based on this characteristic, they can be used as a protected form of amines. They are widely used in polyurethane chemistry, where they are used as cross-linking agents that can be activated by water, so-called "latent amine hardeners", "blocked amines" or "latent curing agents". The skilled person in the field of polyurethane chemistry is familiar with latent amine hardeners and such latent amine hardeners are commercially available. Example of suitable latent amine hardeners may be aldimines, ketimines, or oxazolidines.

The curable precursor disclosed herein comprises a curing accelerator. The curing accelerator comprises calcium hydroxide nitrate particles.

The calcium hydroxide nitrate particles may have the general formula

Ca(OH)NO₃ · n H₂O

wherein n has a value of 0 or 1.

For example, with n = 1 in the general formula, the calcium hydroxide nitrate particles have the formula Ca(OH)NO₃ · H₂O, i.e., the calcium hydroxide nitrate particles are particles of a monohydrate of calcium hydroxide nitrate, and the calcium hydroxide nitrate particles are calcium hydroxide nitrate hydrate particles.

As a further example, with n = 0 in the general formula, the calcium hydroxide nitrate particles have the formula Ca(OH)NO₃, i.e., the calcium hydroxide nitrate particles are an anhydrous compound, and the calcium hydroxide nitrate particles are anhydrous calcium hydroxide nitrate particles.

This means that the term "calcium hydroxide nitrate", as used herein, refers to both the hydrated and the anhydrous form of calcium hydroxide nitrate. The anhydrous form of the calcium hydroxide nitrate particles may also be referred to as "anhydrous calcium hydroxide nitrate particles". The hydrated form of the calcium hydroxide nitrate particles may also be referred to as "calcium hydroxide nitrate hydrate particles".

It is also possible that the calcium hydroxide nitrate particles comprise mixtures of the monohydrate Ca(OH)NO₃ · H₂O and of the anhydrous compound Ca(OH)NO₃.

The calcium hydroxide nitrate particles may be used in combination with calcium hydroxide (Ca(OH)₂) and/or calcium nitrate tetrahydrate (Ca(NO₃)₂ · 4 H₂O) as curing accelerator for the curable precursor disclosed herein.

It has been found that the calcium hydroxide nitrate particles have the function of an activation catalyst, i.e., of a curing accelerator, for the curable precursor of an adhesive composition, for example for the curable precursor of an adhesive epoxide composition, e.g., with the curable precursor comprising an amine curing agent, or for the curable precursor of an adhesive polyurethane composition, with the curable precursor comprising a curable resin comprising a polyisocyanate resin.

The curable precursor disclosed herein may comprise from 0.01 to 20 percent by weight, or from 0.01 to 10 percent by weight, or from 0.05 to 5 percent by weight, or from 0.1 to 5 percent by weight, of the calcium hydroxide nitrate particles, based on the total weight of the curable precursor.

The calcium hydroxide nitrate particles may be used in combination with other accelerators as an accelerator for curing of the curable precursor disclosed herein.

Typically, the calcium hydroxide nitrate particles comprised in the curable precursor disclosed herein have a mean particle size (d₅₀) of up to 300 µm. The calcium hydroxide nitrate particles may have a mean particle size (d₅₀) of from 0.5 to 300 µm, or from 0.5 to 100 µm, or from 0.5 to 20 µm, or from 1 to 10 µm. The mean particle size (d₅₀) can be measured by laser diffraction (wet measurement).

The curable precursor may comprise from 80 to 99.99 percent by weight, from 90 to 99.99 by weight, or from 95 to 99.95 percent by weight, or from 95 to 99.9 percent by weight of the curable resin, based on the total weight of the curable precursor.

For curable precursors comprising epoxy resins and a curing agent, the curable precursor may comprise from 1 to 20 percent by weight, or from 2 to 10 percent by weight, or from 3 to 6 percent by weight of the curing agent, based on the total weight of the curable precursor.

The curable precursor may further comprise thinners, inorganic fillers (e.g., glass fibers, silicates, carbon black, talc, quartz), and organic fillers (e.g., polymer fibers, thermoplastic yarns). The curable precursor may also comprise additives such as dispersing agents, antioxidants, flame retardants, or dyes. The curable precursor may also comprise further accelerators other than the calcium hydroxide nitrate particles.

In some embodiments, the curable precursor is in the form of a two-part composition having a first part and a second part, i.e., it is a 2K composition. The first part and the second part are kept separated prior to combining the two parts and forming the cured composition. At least one of the first part and the second part comprises the calcium hydroxide nitrate particles. The curable precursor comprises a curable resin comprising a first and a second reactive component. The first and the second reactive component are capable of reacting with one another to cure the curable precursor. The second reactive component may comprise a curing agent. For curable precursors in the form of a two-part composition, the first part comprises the first reactive component, and the second part comprises the second reactive component, and at least one of the first part and the second part comprises the calcium hydroxide nitrate particles. In other words, the calcium hydroxide nitrate particles may be comprised in the first part, or in the second part, or in both parts of the curable precursor in the form of a two-part composition.

In some embodiments, the curable precursor is in the form of a one-part (1K) composition. The one-part composition comprises the first and the second reactive component in one part. In other words, the one-part composition comprises the curable resin, which may comprise a curing agent, and the calcium hydroxide nitrate particles in one part.

Further disclosed herein is the use of calcium hydroxide nitrate particles as curing accelerator, i.e., as catalyst, for a curable precursor of an adhesive composition.

For example, calcium hydroxide nitrate particles can be used as curing accelerator for epoxy adhesive compositions. The calcium hydroxide nitrate particles catalyze the reaction between curing agent, e.g., amine curing agent, and epoxy groups of the curable resin, lowering the onset temperature for curing and enhancing the curing speed. Also for polyurethane adhesive compositions, the calcium hydroxide nitrate particles have the function of a curing accelerator, i.e., the calcium hydroxide nitrate particles catalyze the reaction between polyisocyanate resin and polyol, or between polyisocyanate and polyol and amine, and thus enhance the curing speed of curable precursors of polyurethane adhesive compositions.

The calcium hydroxide nitrate particles have the function of a curing accelerator for curable precursors as disclosed herein both for the hydrated and for the anhydrous form, i.e., anhydrous calcium hydroxide nitrate particles have the function of a curing accelerator for curable precursors as disclosed herein, and also calcium hydroxide nitrate hydrate particles have the function of a curing accelerator for curable precursors as disclosed herein.

Further disclosed herein are calcium hydroxide nitrate particles having a mean particle size (d₅₀) of up to 300 µm. The calcium hydroxide nitrate particles have the general formula Ca(OH)(NO₃) · n H₂O; wherein n has a value of 0 or 1. The calcium hydroxide nitrate particles disclosed herein may have a mean particle size (d₅₀) of from 0.5 to 300 µm, or from 0.5 to 100 µm, or from 0.5 to 20 µm, or from 1 to 10 µm. The mean particle size (d₅₀) can be measured by laser diffraction (wet measurement). The calcium hydroxide nitrate particles can be synthesized by the methods disclosed herein.

It has been analyzed by X-ray diffractometry (XRD) that the particles that may be synthesized by the methods disclosed herein may be calcium hydroxide nitrate hydrate (Ca(OH)NO₃ · H₂O) particles, with n = 1 in the general formula Ca(OH)NO₃ · n H₂O. The powder diffraction data of the crystal structure of the calcium hydroxide nitrate hydrate (Ca(OH)NO₃ · H₂O) particles are registered with the Powder Diffraction Pattern number 01-076-2060 in the database of the International Centre for Diffraction Data (ICDD, 2021). The ICSD collection code is 36558.

The calcium hydroxide nitrate particles as disclosed herein and as used for the curable precursor disclosed herein have basic properties which can be shown by measuring the pH value of an aqueous suspension of the calcium hydroxide nitrate particles. The pH value of an aqueous suspension of the calcium hydroxide nitrate particles, for the hydrated and for the anhydrous form, ranges from 12-13. Without wishing to be bound by theory, it is believed that the basic properties of the calcium hydroxide nitrate particles allow the formation of hydrogen bonds to curing agents such as amines, and the formation of hydrogen bonds may be considered as the mechanism for acceleration of the curing speed of the curable precursor.

### First process

The calcium hydroxide nitrate particles as disclosed herein and as used for the curable precursor disclosed herein may be made by a process comprising
providing calcium nitrate tetrahydrate (Ca(NO₃)₂ · 4 H₂O) particles,
providing calcium hydroxide (Ca(OH)₂) particles,
dissolving the calcium nitrate tetrahydrate particles in water to form a nitrate solution,
mixing the calcium hydroxide particles with the nitrate solution,
reacting the calcium hydroxide particles with the nitrate solution,
evaporating the solvent water to form calcium hydroxide nitrate particles, and
optionally drying the calcium hydroxide nitrate particles.

The calcium hydroxide nitrate particles may have the general formula Ca(OH)NO₃ · n H₂O, wherein n has a value of 0 or 1.

The calcium hydroxide nitrate particles may also comprise mixtures of the monohydrate Ca(OH)NO₃ · H₂O and of the anhydrous compound Ca(OH)NO₃, with n = 1 or n = 0, respectively, in the general formula Ca(OH)NO₃ · n H₂O.

The particle size of the calcium nitrate tetrahydrate particles typically is up to 4 mm and may be from 0.5 to 4 mm. The particle size of the calcium nitrate tetrahydrate particles may be measured by sieve analysis or a digital microscope. When using a digital microscope, 50 to 200 particles are measured.

The calcium hydroxide particles may have a mean particle size (d₅₀) of up to 20 µm. The mean particle size may be measured by laser diffraction (wet measurement).

The calcium nitrate tetrahydrate particles are dissolved in water to form a nitrate solution. Deionized water may be used. Dissolving the calcium nitrate tetrahydrate particles may be carried out by mixing the calcium nitrate tetrahydrate particles with water and stirring. Dissolving the calcium nitrate tetrahydrate particles may be performed at room temperature (23 °C). Dissolving at higher temperatures of up to 80 °C is also possible, or even at temperatures of up to 100 °C, in a closed system.

Mixing the calcium hydroxide particles with the nitrate solution may be carried out in conventional mixing aggregates such as a glass beaker or a jar with a stirrer, a mortar, or a stirring kettle equipped with dissolver disc.

Reacting the calcium hydroxide particles with the nitrate solution may be carried out by mechanical treatment such as stirring. The reaction may be carried out at room temperature (23 °C) or at higher temperatures of up to 80 °C. In a closed system the reaction may be carried out at temperatures of up to 100 °C. Typically, a reaction time of 1 hour at room temperature (23 °C) is sufficient.

For n = 1 in the general formula Ca(OH)NO₃ · n H₂O, the reaction is according to reaction equation 1

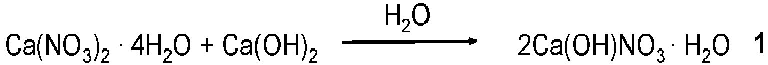

The reaction product is a suspension of calcium hydroxide nitrate hydrate particles in water. The calcium hydroxide nitrate hydrate has the formula Ca(OH)NO₃ · H₂O (with n = 1 in the general formula Ca(OH)NO₃ · n H₂O). The suspension typically is milky-cloudy or turbid. After the reaction has been carried out, the solvent water is evaporated. The solvent water is the water which was used to dissolve the calcium nitrate tetrahydrate particles in water and which was not used as crystal water for the calcium hydroxide nitrate hydrate. The evaporation of the solvent water may be carried out at 40 °C in vacuum, for example. Optionally, the obtained reaction product may be dried. Drying may be performed in a desiccator at ambient conditions. The reaction product may be ground to achieve the desired particle size. Process aids for improving flowability or for avoiding clumping may be added. The obtained product are calcium hydroxide nitrate hydrate particles, as evidenced by X-ray diffractometry (XRD). Optionally, the product may be further dried to remove the crystal water. Drying to remove the crystal water may be performed at temperatures of at least 100 °C, and of up to 250 °C.

In some embodiments of the curable precursor disclosed herein, the calcium hydroxide nitrate hydrate particles (with n = 1 in the general formula Ca(OH)NO₃ · n H₂O) may be used as curing accelerator in the form of a suspension, e.g., for curable resins comprising epoxy resins or polyisocyanate resins. If the calcium hydroxide nitrate hydrate particles are used in the form of a suspension, the evaporation of the water may be omitted. Instead of evaporating the solvent water and then suspending the calcium hydroxide nitrate hydrate particles in water, the suspended calcium hydroxide nitrate hydrate particles as obtained after the reaction step of the calcium hydroxide particles with the nitrate solution may be used.

It is also possible to use wet particles of calcium hydroxide nitrate hydrate (with n = 1 in the general formula Ca(OH)NO₃ · n H₂O), as obtained after the evaporation of the solvent water and without a drying step, as a curing accelerator for the curable precursor disclosed herein. It is also possible to use dry particles of calcium hydroxide nitrate hydrate (with n = 1 in the general formula Ca(OH)NO₃ · n H₂O), as obtained after the evaporation of the solvent water and after a drying step, for the curable precursor disclosed herein.

Furthermore, wet or dry particles of anhydrous calcium hydroxide nitrate (with n = 0 in the general formula Ca(OH)NO₃ · n H₂O) may be used as curing accelerator for the curable precursor disclosed herein. The anhydrous calcium hydroxide nitrate particles may be obtained by further drying the calcium hydroxide nitrate hydrate particles. Drying to remove the crystal water may be performed at temperatures of at least 100 °C, and of up to 250 °C.

### Second process

The calcium hydroxide nitrate particles as disclosed herein and as used for the curable precursor disclosed herein may be made by a process comprising
providing calcium nitrate tetrahydrate (Ca(NO₃)₂ · 4 H₂O) particles,
providing calcium hydroxide (Ca(OH)₂) particles,
melting the calcium nitrate tetrahydrate particles to form a calcium nitrate tetrahydrate melt,
mixing the calcium hydroxide particles with the calcium nitrate tetrahydrate melt,
reacting the calcium hydroxide particles with the calcium nitrate tetrahydrate melt to form calcium hydroxide nitrate particles, and
optionally drying the calcium hydroxide nitrate particles.

The obtained calcium hydroxide nitrate particles may have the general formula Ca(OH)NO₃ · n H₂O, wherein n has a value of 0 or 1.

The obtained calcium hydroxide nitrate particles may also comprise mixtures of the monohydrate Ca(OH)NO₃ · H₂O and of the anhydrous compound Ca(OH)NO₃, with n = 1 or n = 0, respectively, in the general formula Ca(OH)NO₃ · n H₂O.

The calcium hydroxide nitrate particles may also comprise mixtures of the monohydrate Ca(OH)NO₃ · H₂O and of the anhydrous compound Ca(OH)NO₃.

The particle size of the calcium nitrate tetrahydrate particles typically is up to 4 mm and may be from 0.5 to 4 mm. The particle size of the calcium nitrate tetrahydrate particles may be measured by sieve analysis or a digital microscope. When using a digital microscope, 50 to 200 particles are measured.

The calcium hydroxide particles may have a mean particle size (d₅₀) of up to 20 µm. The mean particle size may be measured by laser diffraction (wet measurement).

The calcium nitrate tetrahydrate particles are molten to form a calcium nitrate tetrahydrate melt. For melting the calcium nitrate tetrahydrate particles, the calcium nitrate tetrahydrate particles are heated to a temperature above the melting temperature, i.e., above 42 °C, and of up to 80 °C.

Mixing of the calcium hydroxide particles with the calcium nitrate tetrahydrate melt may be carried out in conventional mixing aggregates such as a glass beaker or a jar with a stirrer, a mortar, or a stirring kettle equipped with dissolver disc.

Reacting of the calcium hydroxide particles with the calcium nitrate tetrahydrate melt may be carried out at a temperature above the melting temperature of the calcium nitrate tetrahydrate particles and of up to 80 °C.

Reacting the calcium hydroxide particles with the calcium nitrate tetrahydrate melt may be carried out by mechanical treatment.

The obtained reaction product are anhydrous calcium hydroxide nitrate particles (with n = 0 or n = 1 in the general formula Ca(OH)NO₃ · n H₂O), or a mixture of anhydrous calcium hydroxide nitrate particles (with n = 0 in the general formula Ca(OH)NO₃ · n H₂O) and calcium hydroxide nitrate hydrate particles (with n = 1 in the general formula Ca(OH)NO₃ · n H₂O).

After the reaction has been carried out, the obtained reaction product may optionally be dried. By drying, anhydrous calcium hydroxide nitrate particles (with n = 0 in the general formula Ca(OH)NO₃ · n H₂O) may be obtained.

Drying may be performed at temperatures of at least 100 °C, and of up to 250 °C.

The reaction product may be ground to achieve the desired particle size.

Further disclosed herein is also a process for making a cured composition from the curable precursor disclosed herein, the process comprising
providing a curable precursor of an adhesive composition, wherein the curable precursor comprises a curable resin and a curing accelerator, wherein the curing accelerator comprises and calcium hydroxide nitrate particles, and
curing the curable precursor.

All the particular and preferred aspects relating to, in particular, the curable resin, the curing agent and the calcium hydroxide nitrate particles which were described hereinabove in the context of the curable precursor, are fully applicable to the process for making a cured composition as described above.

If the curable precursor is provided in the form of a one-part composition, curing is performed by heating the curable precursor to temperatures of up to 210 °C. Typically, the curing time of curable precursors in the form of a one-part composition is from 1 minute to 60 minutes. For example, the curing time of a curable precursor as disclosed herein in the form of a one-part composition may be 30 minutes. Typically, curing of a curable precursor in the form of a one-part composition is carried out at temperatures of at least 120 °C.

If the curable precursor is provided in the form of a two-part composition having a first part and a second part, the process for making a cured composition further comprises mixing the first and the second part of the curable precursor. The mixing step is carried out before curing.

If the curable precursor is provided in the form of a two-part composition, curing can be carried out at room temperature (23 °C), without the need of UV light or increased temperatures.

For achieving shorter curing times, curing may be carried out at higher temperatures of 80 to 210 °C. At these temperatures, curing time typically is from 30 minutes to 1 hour.

The curing time may be adjusted as desired depending on the targeted applications and manufacturing requirements.

For the curable precursor disclosed herein, curing is accelerated, and the curing temperature can be reduced by using the calcium hydroxide nitrate particles as curing accelerator, as compared to curable precursors comprising no curing accelerator, and as compared to curable precursors comprising curing accelerators of the prior art, such as calcium nitrate tetrahydrate particles.

For curable precursors in the form of a two-part composition, the cured composition made by the process disclosed herein may have an overlap shear strength (OLS) of at least 0.5 MPa, at least 2.0 MPa, at least 2.5 MPa, at least 3.0 MPa, at least 3.5 MPa, at least 4.0 MPa, or at least 4.5 MPa, when measured according to the test method described in the experimental section.

For curable precursors in the form of a one-part composition, the cured composition made by the process disclosed herein may have an overlap shear strength (OLS) in a range from 0.5 to 30.0 MPa, from 2.0 to 8.0 MPa, from 2.5 to 8.0 MPa, from 2.5 to 7.0 MPa, from 3.0 to 7.0 MPa, from 3.5 to 6.5 MPa, or from 4.0 to 6.0 MPa, when measured according to the test method described in the experimental section.

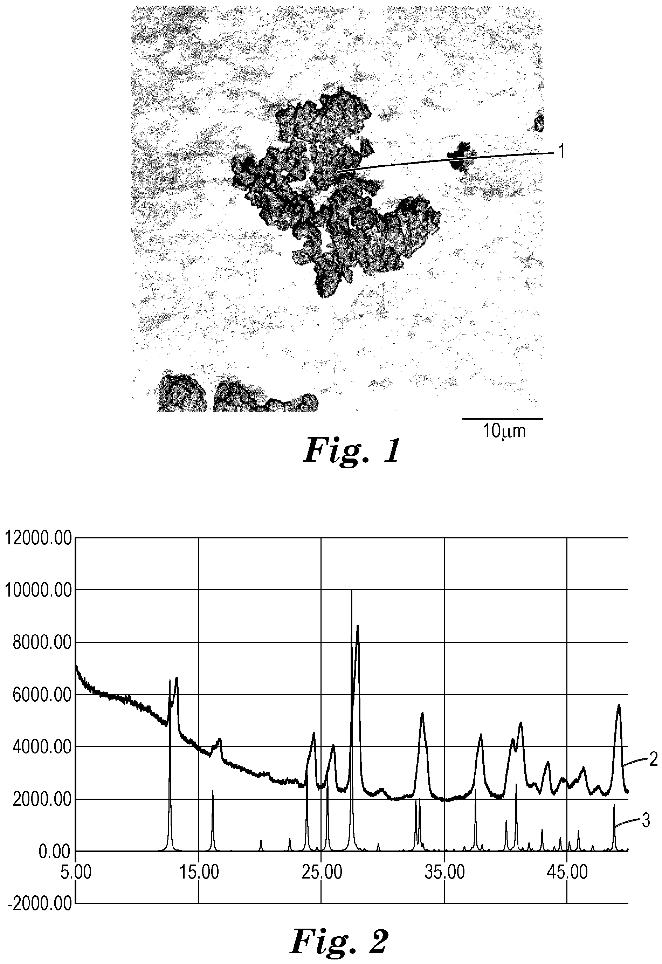

Figure 1 shows a scanning electron micrograph of calcium hydroxide nitrate hydrate (Ca(OH)NO₃ · H₂O) particles 1 as disclosed herein. The calcium hydroxide nitrate hydrate particles shown in Figure 1 are agglomerated.

Figure 2 shows XRD results of calcium hydroxide nitrate hydrate (Ca(OH)NO₃ · H₂O) particles as disclosed herein. 2 Theta is shown on the x axis, the intensity is shown on the y axis. The upper powder diffraction pattern 2 corresponds to the measured data obtained from Example 1. The lower powder diffraction pattern 3 corresponds to the simulated data obtained from the powder diffraction data of the crystal structure of calcium hydroxide nitrate hydrate (Ca(OH)NO₃ · H₂O) as registered with the Powder Diffraction Pattern number 01-076-2060 in the database of the International Centre for Diffraction Data (ICDD, 2021). The ICSD collection code is 36558.

As can be seen from Figure 2, the simulated powder diffraction pattern 3 corresponds well to the measured powder diffraction pattern 2, confirming that Ca(OH)NO₃ · H₂O particles have been obtained.

The curable precursor disclosed herein and the cured composition made from the curable precursor may be used for adhesive applications in the automotive industry, such as for bonding parts of the primary structure made from aluminum, steel, or composites such as carbon-fiber reinforced polymers, and for bonding hang-on-parts such as doors, trunks, tailgates.

### Examples

### Test Methods

### Differential scanning calorimetry (DSC) measurements according to DIN 65467

The curable precursors were prepared by weighing the curable resin and finally adding the curing accelerator (details see Examples 3 to 8 and Comparative Examples 1 to 4); for some Comparative Examples, no curing accelerator was added. After a homogeneous mixture was achieved, the formulations were applied to the surface of the test panel (steel, grade DX54+ZMB-RL1615, 0.8 mm thickness, 25 x 100 mm) for further testing in the manner specified below.

The DSC measurements were conducted on a Netzsch DSC 214 Polyma Differential Scanning Calorimeter (commercially available from Netzsch GmbH, Selb, Germany). Formulation samples for measurements had a mass ranging from 10-20 mg. A heating rate of 5 K/min was used at a temperature ranging from -20 °C to 300 °C. The DSC onset temperature was calculated for a single peak with the peak temperature determined at the peak maximum. The DSC onset temperature serves as an indicator of the curing performance of the thermal curing system used in the exemplary curable compositions. The DSC onset temperatures are reported in °C.

### Particle size determination by laser diffraction (static light scattering)

The mean particle size (d₅₀) was determined using a Mastersizer 2000 with dispensing unit Hydro S 2000 from Malvern Instruments (now Malvern Panalytical) and dispersing an appropriate amount of solid in ethanol. Analysis was conducted using the Fraunhofer model.

### Particle size determination by SEM

A Thermo Scientific^{™} Phenom^{™} desktop scanning electron microscope (SEM) was used for imaging of the calcium hydroxide nitrate particles, and the Thermo Scientific Phenom ParticleMetric software was utilized to determine the mean particle size (d₅₀). The circle equivalent diameter was used as parameter for measuring the particle size, and 100 to 200 particles were measured in one SEM image to determine the mean particle size. Particle size measurement by SEM was used as a further method in addition to laser diffraction.

### Powder X-rav diffractometry (XRD) for phase confirmation and structure comparison

A D2 Phaser equipped with lynxeye detector (Bruker AXS GmbH, Karlsruhe, Germany) was used for x-ray analysis of the powdered solid on low background sample holder (Si). A Cu source was used at 30 kV and 10 mA power output.

### Overlap Shear Strength (OLS) according to DIN EN 1465

The surface of the OLS metal sheets (steel, grade DX54+ZMB-RL1615, 0.8 mm thickness) were cleaned with n-heptane. The metal sheets are left at ambient room temperature (23 °C +/- 2 °C, 50% relative humidity +/-5%) for 24 hours prior to testing and the OLS strength is measured as described below.

Overlap shear strength was determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, a curable composition is placed onto one surface of a prepared metal sheet and a sprinkle of glass beads (0.30 mm diameter) are placed on the curable composition to ensure a thickness of 0.30 mm of the curable composition layer during the curing process. Afterwards, the sample was covered by a second metal sheet forming an overlap joint of 10 mm. The overlap joints are then clamped together using two binder clips and the test assemblies are further stored at room temperature for 4 hours after bonding, and then placed into an air circulating oven from Heraeus (curing duration and temperatures to be taken from example sections). The next day, the samples are tested directly. Three samples are measured for each of the examples and results averaged and reported in MPa.

### Raw materials

In the examples, the following raw materials are used.

**Table 1**

| Abbreviation | Description and Source |
|---|---|
| DICY | Omicure DDA 10, dicyandiamide, curing agent, obtained from Huntsman, The Woodlands, TX, USA |
| THX1 | Aerosil R202, thixotropic agent, obtained from Evonik, Marl, Germany |
| THX2 | Aerosil R812, thixotropic agent, obtained from Evonik, Marl, Germany |
| DGEBA | Epikote 828, bisphenol A diglycidyl ether, obtained from Hexion, Columbus, OH, USA |
| FAA | Fatty acid amine reaction adduct, trioxatridecane diamine (TTD) adducted with EPON 828 in ratio of 58 g TTD and 18 g EPON 828 with an amine equivalent weight of 79 g/mol (EPON 828 is an epoxy resin obtained from Hexion Specialty Chemicals GmbH, Rosbach, Germany), curing agent |
| CAN | Calcium nitrate tetrahydrate, obtained from Sigma Aldrich |
| DES | Desmodur N3300, aliphatic polyisocyanate, obtained from Covestro, Leverkusen, Germany |
| POL | Poly-G 540-450, polyether tetrol, obtained from Monument Chemical, Belgium |

### Example 1

### Synthesis of calcium hydroxide nitrate hydrate (Ca(OH)NO₃ · H₂O) particles

In a Speedmixer cup (available from Hauschild Engineering, Germany), 10.0 g calcium nitrate tetrahydrate (Ca(NO₃)₂ · 4 H₂O) were dissolved in 10 mL deionized H₂O. 3.13 g (1eq) calcium hydroxide (Ca(OH)₂) were added in powder form to the nitrate solution and the mixture was vigorously stirred in a Speedmixer (DAC 150, available from Hauschild Engineering, Germany). The calcium hydroxide slowly reacted with the nitrate solution and the mixture became milk-like over time. After 1 hour of mixing, the water was evaporated by heating at 40 °C for 24h and the obtained product was dried in desiccator at ambient conditions. The off-white product was ground in a mortar to de-agglomerate the obtained agglomerated particles and weighed. The quantitative product yield was 10.6 g. XRD analysis showed that the obtained product are calcium hydroxide nitrate hydrate particles (Ca(OH)NO₃ · H₂O; Mw = 137.1 g/mol). The mean particle size (d₅₀) of the ground product measured by laser diffraction as described above was 1.56 µm.

A scanning electron micrograph of the ground product is shown in Figure 1.

The mean particle size of the ground product measured by SEM as described above was 1.78 µm.

The obtained calcium hydroxide nitrate hydrate particles can be used as accelerator for a curable precursor of an adhesive composition.

### Example 2

### Synthesis of anhydrous calcium hydroxide nitrate (Ca(OH)NO₃) particles

5.0 g calcium nitrate tetrahydrate (Ca(NO₃)₂ · 4 H₂O) were molten in a Speedmixer cup at 45 °C to give a clear liquid of the pure compound. 1.56 g of Ca(OH)₂ were added in powder form to the liquid nitrate salt. The obtained suspension was then treated in a Speedmixer (DAC 150, available from Hauschild Engineering, Germany) for 5 min at 3500 RPM. Solid small granules were obtained and ground in a mortar. The obtained product was partly dehydrated as a consequence of the high shear energy and temperature during the reaction and processing step, which became evident from the resulting mass of the obtained product. 5.22 g of the ground granules were dried in an oven at 115 °C for 4 h, yielding the anhydrous form of the calcium hydroxide nitrate, Ca(OH)NO₃. The quantitative product yield was 4.6 g. Thermogravimetric and weight analysis showed that the obtained product are calcium hydroxide nitrate particles (Ca(OH)NO₃; Mw = 119.1 g/mol).

The obtained anhydrous calcium hydroxide nitrate particles can be used as curing accelerator for a curable precursor of an adhesive composition. The obtained calcium hydroxide nitrate is stable at ambient conditions, i.e., not hygroscopic.

### Examples 3 to 6 (EX3 to EX6) and Comparative Example 1 (CEX1)

A one-part (1K) composition of a curable precursor comprising an epoxy resin was formulated by adding DICY and THX1 to DGEBA in a Speemixer cup (Speedmixer DAC 150, available from Hauschild Engineering, Germany) and mixing for 5 min at 3500 rpm. A homogeneous mixture was obtained. For Examples 3 to 5, calcium hydroxide nitrate hydrate particles as prepared in Example 1 (CHN (EX1)) were then added to the resin mixture and mixed for 1 min at 3500 rpm. For Example 6, anhydrous calcium hydroxide nitrate particles as prepared in Example 2 (CHN (EX2)) were added to the resin mixture and mixed for 1 min at 3500 rpm. For Comparative Example 1, no calcium hydroxide nitrate hydrate particles were added. The amounts that were mixed are shown in Table 2.

**Table 2**

| Example No. | DGEBA [Amount in g] | DICY [Amount in g] | THX1 [Amount in g] | CHN (EX1) [Amount in g] | CHN (EX2) [Amount in g] |
|---|---|---|---|---|---|
| CEX1 | 10.0 | 0.5 | 0.5 | - | - |
| EX3 | 10.0 | 0.5 | 0.5 | 0.25 | - |
| EX4 | 10.0 | 0.5 | 0.5 | 0.75 | - |
| EX5 | 10.0 | 0.5 | 0.5 | 1.5 | - |
| EX6 | 10.0 | 0.5 | 0.5 | - | 1.5 |

Results of DSC measurements are shown in Table 3, results of overlap shear tests and curing conditions are shown in Table 8.

**Table 3**

| Example No. | Tₒₙₛₑₜ [°C] | Tₚₑₐₖ [°C] | DSC area 25-250 °C [J/g] |
|---|---|---|---|
| CEX1 | 184.0 | 194.1 | 245.5 |
| EX3 | 175.0 | 189.9 | 243.3 |
| EX4 | 163.0 | 181.7 | 297.9 |
| EX5 | 158.9 | 177.1 | 244.2 |
| EX6 | 154.8 | 169.9 | 242.1 |

As can be seen from Table 3, the onset temperature of EX3 (with the addition of the calcium hydroxide nitrate hydrate particles) is lower than for CEX1. As a consequence of the lower onset temperature, EX3 can be cured at a curing temperature of 180 °C within 30 minutes and also at a curing temperature of 170 °C, whereas for CEX1 curing is possible at a curing temperature of 180 °C within 30 minutes, but at a temperature of 170 °C, a curing time of 30 minutes is not sufficient (see Table 8). Furthermore, with the addition of calcium hydroxide nitrate hydrate particles, a further lowering of the curing temperature to 160 °C and 150 °C is possible (EX4, EX5, and EX6, see Tables 3 and 8).

### Example 7 (EX7) and Comparative Examples 2 and 3 (CEX2 and CEX3)

For Example 7 and Comparative Examples 2 and 3, Part 1 of a two-part (2K) composition of a curable precursor comprising an epoxy resin was formulated by adding THX1 to DGEBA in a Speedmixer cup (Speedmixer DAC 600.2 VAC-P, available from Hauschild Engineering, Germany) and mixing for 5 min at 3500 rpm. A homogeneous mixture was obtained.

For Part 2 of Example 7 and Comparative Examples 2 and 3, THX1 was added to FAA in a Speemixer cup and mixing for 5 min at 3500 rpm. For Part 2 of Example 7, calcium hydroxide nitrate hydrate particles as prepared in Example 1 (CHN (EX1)) were then added to the resin mixture and mixed for 1 min at 3500 rpm. For Part 2 of Comparative Example 3, CAN was added to the resin mixture of THX1 and FAA and mixed for 1 min at 3500 rpm. The amounts that were mixed are shown in Table 4. For Part 2 of Comparative Example 2, no curing accelerator was added.

Prior to applying onto the surface of a test panel (as described above for the DSC measurements), Part 1 and 2 of the 2K composition are mixed in a 2:1 ratio, stirring both parts in an aluminium pan for 5 min until a homogeneous mixture is obtained.

**Table 4**

| Example No. | Part 1 | | Part 2 | | | |
|---|---|---|---|---|---|---|
| | DGEBA [g] | THX1 [g] | FAA [g] | THX1 [g] | CAN [g] | CHN (EX1) [g] |
| EX7 | 10.0 | 0.5 | 10.0 | 0.5 | - | 0.25 |
| CEX2 | 10.0 | 0.5 | 10.0 | 0.5 | - | - |
| CEX3 | 10.0 | 0.5 | 10.0 | 0.5 | 0.5 | - |

**Table 5**

| Example No. | Tₒₙₛₑₜ [°C] | Tₚₑₐₖ [°C] | DSC area 25-180 °C [J/g] |
|---|---|---|---|
| EX7 | 42.6 | 109.1 | 123.5 |
| CEX2 | 44.6 | 110.5 | 72.3 |
| CEX3 | 42.3 | 109.9 | 103.0 |

Results of DSC measurements are shown in Table 5, results of overlap shear tests and curing conditions are shown in Table 8.

As can be seen from Table 5, the DSC area 25-180 °C of EX7 (with the addition of the calcium hydroxide nitrate hydrate particles) is higher than for CEX2 and CEX3, i.e., the reaction rate is higher for EX7 compared to CEX2 and CEX3. As can be seen from Table 8, overlap shear strength for EX7 is higher than for CEX2 and CEX3.

### Example 8 (EX8) and Comparative Example 4 (CEX4)

Part 1 of a two-part (2K) composition of a curable precursor comprising a polyisocyanate resin was formulated by adding THX2 to POL in a Speemixer cup (Speedmixer DAC 600.2 VAC-P, available from Hauschild Engineering, Germany) and mixing for 5 min at 3500 rpm. A homogeneous mixture was obtained. For Example 8, calcium hydroxide nitrate hydrate particles as prepared in Example 1 (CHN (EX1)) were added to the resin mixture and mixed for 1 min at 3500 rpm. For Comparative Example 4, no accelerator was added. Part 2 solely consisted of DES, no further processing was needed. The amounts that were mixed are shown in Table 6.

Prior to applying onto the surface of a test panel (as described above for the DSC measurements), Part 1 and 2 of the 2K composition are mixed in a 2:1 ratio, stirring both parts in an aluminium pan for 5 min until a homogeneous mixture is obtained.

**Table 6**

| Example No. | Part 1 | | | Part 2 |
|---|---|---|---|---|
| | POL [g] | THX2 [g] | CHN (EX1) [g] | DES [g] |
| EX8 | 22.0 | 0.5 | 1.0 | 11.0 |
| CEX4 | 22.0 | 0.5 | - | 11.0 |

**Table 7**

| Example No. | Tₒₙₛₑₜ [°C] | Tₚₑₐₖ [°C] | DSC area 25-180 °C [J/g] |
|---|---|---|---|
| EX8 | 75.1 | 114.1 | 135.5 |
| CEX4 | 128.4 | 196.4 | 122.6 |

Results of DSC measurements are shown in Table 7, results of overlap shear tests and curing conditions are shown in Table 8.

As can be seen from Table 7, the onset temperature (Tₒₙₛₑₜ) for EX8 is about 50 °C lower than the onset temperature for CEX4, and, correspondingly, also the peak temperature (Tₚₑₐₖ) of EX8 is lower compared to CEX4. In addition, also the DSC area (25-180 °C) is higher for EX8 than for CEX4. This shows that the addition of the calcium hydroxide nitrate hydrate particles has an accelerating effect to the curing reaction in 2K polyurethane adhesive compositions.

**Table 8**

| Formulation from Example No. | Curing condition | Overlap Shear Strength (OLS) [MPa] |
|---|---|---|
| EX3 | 180 °C, 0.5 h | 10.4 |
| EX3 | 170 °C, 0.5 h | 9.4 |
| EX4 | 160 °C, 0.5 h | 7.0 |
| EX5 | 150 °C, 0.5 h | 9.0 |
| EX6 | 150°C,0.5h | 6.1 |
| CEX1 | 180 °C, 0.5 h | 11.5 |
| CEX1 | 170 °C, 0.5 h | no curing after 0.5 h ^{*)} |
| EX7 | 80 °C, 1.0 h | 4.0 |
| CEX2 | 80 °C, 1.0 h | 1.6 |
| CEX3 | 80 °C, 1.0 h | 1.8 |
| EX8 | 80 °C, 1.0 h | 0.2 |
| CEX4 | 80 °C, 1.0 h | <0.01 |

| | | |
|---|---|---|
| ^{*)} No curing, sample is soft and can be easily separated from OLS test panel (manually). | | |

As can be seen from Table 8, even with the addition of the calcium hydroxide nitrate hydrate particles, adhesives having good adhesive strength can be obtained.

## Claims

1. Curable precursor of an adhesive composition, the curable precursor comprising a curable resin and a curing accelerator, wherein the curing accelerator comprises calcium hydroxide nitrate particles.

2. The curable precursor of claim 1, wherein the curable resin comprises a resin selected from the group consisting of epoxy resins, polyisocyanate resins, and combinations thereof.

3. The curable precursor of claim 1 or 2, wherein the curable resin comprises an epoxy resin, and wherein the curable precursor further comprises a curing agent, and wherein the curing agent is selected from the group consisting of amines, acid anhydrides, and BF₃ amine complexes.

4. The curable precursor of any of claims 1 to 3, wherein the curable resin comprises an epoxy resin, and wherein the curable precursor further comprises a curing agent, and wherein the curing agent comprises an amine, and wherein the amine preferably comprises dicyandiamide.

5. The curable precursor of any of claims 1 to 4, wherein the curable precursor comprises from 0.1 to 20 percent by weight of the calcium hydroxide nitrate particles, based on the total weight of the curable precursor.

6. The curable precursor of any of claims 1 to 5, wherein the calcium hydroxide nitrate particles have a mean particle size (d₅₀) of from 0.5 to 300 µm.

7. The curable precursor of any of claims 1 to 6, wherein the curable precursor is in the form of a two-part composition having a first part and a second part, and wherein at least one of the first part and the second part comprises the calcium hydroxide nitrate particles.

8. The curable precursor of any of claims 1 to 7, wherein the curable precursor is in the form of a one-part composition.

9. Use of calcium hydroxide nitrate particles as curing accelerator for a curable precursor of an adhesive composition.

10. Calcium hydroxide nitrate particles having a mean particle size (d₅₀) of up to 300 µm.

11. Process for making calcium hydroxide nitrate particles as used for the curable precursor of any of claims 1 to 8, comprising
providing calcium nitrate tetrahydrate particles,
providing calcium hydroxide particles,
dissolving the calcium nitrate tetrahydrate particles in water to form a nitrate solution,
mixing the calcium hydroxide particles with the nitrate solution,
reacting the calcium hydroxide particles with the nitrate solution,
evaporating the solvent water to form calcium hydroxide nitrate particles, and
optionally drying the calcium hydroxide nitrate particles.

12. The process of claim 11, wherein reacting the calcium hydroxide particles with the nitrate solution is carried out by mechanical treatment.

13. Process for making calcium hydroxide nitrate particles as used for the curable precursor of any of claims 1 to 8 comprising
providing calcium nitrate tetrahydrate particles,
providing calcium hydroxide particles,
melting the calcium nitrate tetrahydrate particles to form a calcium nitrate tetrahydrate melt,
mixing the calcium hydroxide particles with the calcium nitrate tetrahydrate melt,
reacting the calcium hydroxide particles with the calcium nitrate tetrahydrate melt to form calcium hydroxide nitrate particles, and
optionally drying the calcium hydroxide nitrate particles.

14. The process of claim 13, wherein reacting the calcium hydroxide particles with the calcium nitrate tetrahydrate melt is carried out by mechanical treatment.

15. Process for making a cured composition from the curable precursor of any of claims 1 to 8, the process comprising
providing a curable precursor of an adhesive composition, wherein the curable precursor comprises a curable resin and a curing accelerator, wherein the curing accelerator comprises calcium hydroxide nitrate particles, and
curing the curable precursor.
